# EUROPEAN PATENT APPLICATION

(11) **EP 2 878 361 A1**
(43) Date of publication of application: **03.06.2015**
(21) Application number: 14195686.2
(22) Date of filing: 13.10.2009
(51) Int. Cl.: B01D 53/94, B01J 23/72, B01J 29/072, B01J 29/76

(54) **Transition metal-containing aluminosilicate zeolite**

(30) Priority: 15.10.2008 GB 0818887
(62) Divisional of application: 09737470.6
(71) Applicant: Johnson Matthey Public Limited Company, London EC4A 4AB (GB)
(72) Inventor: Chandler, Guy Richard, Cambridge, Cambridgeshire CB23 1HB (GB); Collins, Neil, Litlington, Hertfordshire SG8 0QL (GB); Foo, Rodney, Kok Shin, Reading, Berkshire RG4 9NH (GB); Green, Alexander, Nicholas, Michael, Baldock, Hertfordshire SG7 5AL (GB); Phillips, Paul, Royston, Hertfordshire SG8 5YR (GB); Rajaram, Raj Rao, Slough, Berkshire SL3 7PH (GB); Reid, Stuart, David, Cambourne, Cambridgeshire CB23 5JA (GB)
(74) Representative: Nunn, Andrew Dominic

(57) **Abstract**

A synthetic aluminosilicate zeolite catalyst containing at least one catalytically active transition metal selected from the group consisting of Cu, Fe, Hf, La, Au, In, V, lanthanides and Group VIII transition metals, which aluminosilicate zeolite is a small pore aluminosilicate zeolite having a maximum ring size of eight tetrahedral atoms, wherein the mean crystallite size of the aluminosilicate zeolite determined by scanning electron microscope is >0.50 micrometre.

## Description

The present invention relates to a synthetic aluminosilicate zeolite catalyst containing at least one catalytically active transition metal. The zeolites can be used for selective catalytic reduction (SCR) of nitrogen oxides in exhaust gases, such as exhaust gases from internal combustion engines, using a nitrogenous reductant.

It is known to convert oxides of nitrogen (NOₓ) in a gas to nitrogen by contacting the NOₓ with a nitrogenous reducing agent, e.g. ammonia or an ammonia precursor such as urea, in the presence of a zeolite catalyst containing at least one transition metal, and it has been suggested to adopt this technique for treating NOₓ emitted from vehicular lean-burn internal combustion engines, see for example DieselNet Technology Guide "Selective Catalytic Reduction" Revision 2005.05d, by W. Addy Majewski published on www.dieselnet.com.

US patent no. 4,544, 538 discloses a synthetic zeolite having a crystal structure of chabazite (CHA), designated SSZ-13 prepared using a Structure Directing Agent (SDA) such as the N,N,N-trimethyl-1-adamantammonium cation. The SSZ-13 can be ion exchanged with transition metals such as rare earth, Mn, Ca, Mg, Zn, Cd, Pt, Pd, Ni, Co, Ti, Al, Sn, Fe and Co for use e.g. in hydrocarbon conversion reactions.

US patent no. 6,709,644 discloses a synthetic zeolite having a crystal structure of chabazite (CHA) of small crystallite size (on average <0.5 micrometres) designated SSZ-62. SSZ-62 can also be prepared using the N,N,N-trimethyl-1-adamantammonium cation SDA. Example 1 of US 6,709,644 compares the average crystal size of SSZ-62 with the average crystal size of SSZ-13. The document suggests that SSZ-62 can be used in a process for converting lower alcohols or the zeolite can be exchanged with copper or cobalt for use in catalysing the reduction of NOₓ in a lean gas stream e.g. of an internal combustion engine. However, the activity of small and large crystallite size materials are only illustrated by a methanol to olefin reaction.

In our International patent application no. PCT/GB2008/001451 filed 24th April 2008 we explain that transition metal/zeolite catalysts such as Cu/Beta and/or Fe/Beta are being considered for urea and/or NH₃ SCR of NOₓ from mobile diesel engines to meet new emission standards. These catalysts are required to withstand relatively high temperatures under exhaust conditions, and may also be exposed to relatively high levels of hydrocarbons (HC), which can be adsorbed onto or into the pores of the zeolites. The adsorbed HC may affect the NH₃ SCR activities of these metal zeolites catalysts by blocking the active sites or blocking access to the active sites for the NH₃-NOₓ reaction. Furthermore, these adsorbed HC species may be oxidised as the temperature of the catalytic system is raised, generating a significant exotherm, which can thermally or hydrothermally damage the catalyst. It is therefore desirable to minimise HC adsorption on the SCR catalyst, especially during cold start when significant amounts of HC can be emitted from the engine.

In our PCT/GB2008/001451 we suggest that both of these disadvantages of larger pore zeolite catalysts can be reduced or overcome by using small pore zeolites, which generally allow the diffusion of NH₃ and NOₓ to the active sites inside the zeolite pores, but which generally hinder diffusion of hydrocarbon molecules into the pores. Zeolites that have the small pore dimensions to induce this shape selectivity whereby larger hydrocarbons are prevented from accessing the active metal sites within the zeolite cavities include CHA, ERI and LEV. Additionally, small pore zeolite-based SCR catalysts produce less N₂O as a by-product of the NOₓ reduction reaction.

We have researched into aluminosilicate zeolite materials and have discovered, very surprisingly, that large crystallite aluminosilicate zeolite materials have higher activity for the SCR process using a nitrogenous reductant than the same aluminosilicate zeolite material of smaller crystallite size.

According to one aspect, the invention provides a synthetic aluminosilicate zeolite catalyst containing at least one catalytically active transition metal selected from the group consisting of Cu, Fe, Hf, La, Au, In, V, lanthanides and Group VIII transition metals, which aluminosilicate zeolite is a small pore aluminosilicate zeolite having a maximum ring size of eight tetrahedral atoms, wherein the mean crystallite size of the aluminosilicate zeolite determined by scanning electron microscope is >0.50 micrometre. Preferably, the at least one catalytically active transition metal is one of copper and iron. In embodiments, the zeolite can contain both copper and iron.

The Examples show a trend of increasing NOₓ reduction activity of fresh and aged copper/CHA catalysts with increasing crystallite size.

Scanning electron microscopy can determine the morphology and crystallite size of zeolites according to the invention. It is desirable that the mean particle size of the aluminosilicate zeolite as measured by SEM is >0.50 micrometre, but preferably greater than 1.00 micrometre, such as >1.50 micrometres. In embodiments, the mean crystallite size is <15.0 micrometres, such as <10.0 micrometres or <5.0 micrometres.

In embodiments, the aluminosilicate zeolite catalyst according to the invention is selected from the group consisting of zeolites having a maximum ring size of eight tetrahedral atoms especially Framework Type Codes CHA, ERI and LEV, most preferably CHA.

Where the Framework Type Code of the aluminosilicate zeolite is CHA, an isotype framework structure of CHA can be selected from the group consisting of, for example, Linde-D, Linde-R, SSZ-13, LZ-218, Phi and ZK-14.

A type material or isotype framework structure of ERI Framework Type Code zeolites can be, for example, erionite, ZSM-34 or Linde Type T.

LEV Framework Type Code isotype framework structures or type material can be, for example, levynite, Nu-3, LZ-132 or ZK-20.

The total at least one transition metal present in the catalyst is from 0.1 to 10.0 wt% based on the total weight of the zeolite catalyst, such as 0.5 to 5.0 wt% based on the total weight of the zeolite catalyst.

According to another aspect, the invention provides a method of converting nitrogen oxides in a gas to nitrogen by contacting the nitrogen oxides with a nitrogenous reducing agent in the presence of an aluminosilicate zeolite catalyst according to the invention.

The nitrogen oxides can be reduced with the reducing agent at a temperature of at least 100°C, for example from about 150°C to 750°C.

In a particular embodiment, the nitrogen oxides reduction is performed in the presence of oxygen.

The addition of nitrogenous reductant can be controlled so that NH₃ at the zeolite catalyst inlet is controlled to be 60% to 200% of theoretical ammonia calculated at 1:1 NH₃/NO and 4:3 NH₃/NO₂.

In a particular embodiment, wherein nitrogen monoxide in the gas is oxidised to nitrogen dioxide using an oxidation catalyst located upstream of the zeolite catalyst and the resulting gas is then mixed with nitrogenous reductant before the mixture is fed into the zeolite catalyst, wherein the oxidation catalyst is adapted to yield a gas stream entering the zeolite catalyst having a ratio of NO to NO₁ of from about 4:1 to about 1:3 by volume.

In the method according to the invention, the nitrogenous reductant can be ammonia *per* se, hydrazine or an ammonia precursor selected from the group consisting of urea ((NH₂)₂CO), ammonium carbonate, ammonium carbamate, ammonium hydrogen carbonate and ammonium formate.

The gas containing nitrogen oxides to be treated with the method according to the present invention can be derived from a combustion process, particularly from an internal combustion engine such as a stationary source or preferably a vehicular lean burn internal combustion engine.

According to another aspect, the invention provides an exhaust system for a vehicular lean-burn internal combustion engine, which system comprising a conduit for carrying a flowing exhaust gas, a source of nitrogenous reductant, a synthetic aluminosilicate zeolite catalyst containing at least one catalytically active transition metal selected from the group consisting of Cu, Fe, Hf, La, Au, In, V, lanthanides and Group VIII transition metals, which aluminosilicate zeolite is a small pore aluminosilicate zeolite having a maximum ring size of eight tetrahedral atoms, disposed in a flow path of the exhaust gas and means for metering nitrogenous reductant into a flowing exhaust gas upstream of the zeolite catalyst, wherein the mean crystallite size of the aluminosilicate zeolite determined by scanning electron microscope is >0.50 micrometre.

The invention may also be defined according to the following definitions:
1) A synthetic aluminosilicate zeolite catalyst containing at least one catalytically active transition metal selected from the group consisting of Cu, Fe, Hf, La, Au, In, V, lanthanides and Group VIII transition metals, which aluminosilicate zeolite is a small pore aluminosilicate zeolite having a maximum ring size of eight tetrahedral atoms, wherein the mean crystallite size of the aluminosilicate zeolite determined by scanning electron microscope is >0.50 micrometre.
2) An aluminosilicate zeolite catalyst according to 1), wherein the at least one catalytically active transition metal is copper, iron or copper and iron.
3) An aluminosilicate zeolite catalyst according to 1) or 2), wherein the at least one catalytically active transition metal consists of copper.
4) An aluminosilicate zeolite catalyst according to 1), 2) or 3), wherein the mean crystallite size is >1.00 micrometre.
5) An aluminosilicate zeolite catalyst according to 1), 2), 3) or 4), wherein the mean crystallite size is >1.50 micrometres.
6) An aluminosilicate zeolite catalyst according to any of 1) to 5) inclusive, wherein the mean crystallite size is <15.00 micrometres.
7) An aluminosilicate zeolite catalyst according to any of 1) to 6) inclusive, wherein the aluminosilicate zeolite is selected from the group consisting of Framework Type Codes CHA, ERI and LEV.
8) An aluminosilicate zeolite catalyst according to any of 1) to 6) inclusive, wherein the aluminosilicate zeolite is from the Framework Type Code CHA.
9) An aluminosilicate zeolite catalyst according to 7) or 8) wherein isotype framework structures of CHA are selected from the group consisting of Linde-D, Linde-R, SSZ-13, LZ-218, Phi and ZK-14.
10) An aluminosilicate zeolite catalyst according to 7), wherein a type material or isotype framework structures of ERI are erionite, ZSM-34 or Linde Type T.
11) An aluminosilicate zeolite catalyst according to 7), wherein a type material or isotype framework structures of LEV are levynite, Nu-3, LZ-132 or ZK-20.
12) An aluminosilicate zeolite catalyst according to any of 1) to 11) inclusive, wherein the total at least one transition metal present in the catalyst is from 0.1 to 10.0 wt% based on the total weight of the zeolite catalyst.
13) An aluminosilicate zeolite catalyst according to 12), wherein the total at least one transition metal present in the catalyst is from 0.5 to 5.0 wt% based on the total weight of the zeolite catalyst.
14) A method of converting nitrogen oxides in a gas to nitrogen by contacting the nitrogen oxides with a nitrogenous reducing agent in the presence of an aluminosilicate zeolite catalyst according to any preceding claim.
15) A method according to 14), wherein the nitrogen oxides are reduced with the reducing agent at a temperature of at least 100°C.
16) A method according to 15), wherein the temperature is from about 150°C to 750°C.
17) A method according to 14), 15) or 16), wherein the nitrogen oxides reduction is performed in the presence of oxygen.
18) A method according to 14), 15), 16) or 17), wherein addition of nitrogenous reductant is controlled so that NH₃ at the zeolite catalyst inlet is controlled to be 60% to 200% of theoretical ammonia calculated at 1:1 NH₃/NO and 4:3 NH₃/NO₂.
19) A method according to any of 14) to 18) inclusive, wherein nitrogen monoxide in the gas is oxidised to nitrogen dioxide using an oxidation catalyst located upstream of the zeolite catalyst and the resulting gas is then mixed with nitrogenous reductant before the mixture is fed into the zeolite catalyst, wherein the oxidation catalyst is adapted to yield a gas stream entering the zeolite catalyst having a ratio of NO to NO₂ of from about 4:1 to about 1:3 by volume.
20) A method according to any of 14) to 19) inclusive, wherein the nitrogenous reductant is ammonia *per se,* hydrazine or an ammonia precursor selected from the group consisting of urea ((NH₂)₂CO), ammonium carbonate, ammonium carbamate, ammonium hydrogen carbonate and ammonium formate.
21) A method according to any of 14) to 20) inclusive, wherein the gas containing nitrogen oxides is derived from a combustion process.
22) A method according to 21), wherein the combustion process is the combustion of fuel in a vehicular lean burn internal combustion engine.
23) An exhaust system for a vehicular lean-burn internal combustion engine, which system comprising a conduit for carrying a flowing exhaust gas, a source of nitrogenous reductant, a synthetic aluminosilicate zeolite catalyst containing at least one catalytically active transition metal selected from the group consisting of Cu, Fe, Hf, La, Au, In, V, lanthanides and Group VIII transition metals, which aluminosilicate zeolite is a small pore aluminosilicate zeolite having a maximum ring size of eight tetrahedral atoms, disposed in a flow path of the exhaust gas and means for metering nitrogenous reductant into a flowing exhaust gas upstream of the zeolite catalyst, wherein the mean crystallite size of the aluminosilicate zeolite determined by scanning electron microscope is >0.50 micrometre.

In order that the invention may be more fully understood, the following Examples are provided by way of illustration only.

### Example 1 - Preparation of zeolite samples

### Zeolite A

Small crystallite CHA was prepared according to Example 1 of US 6709644 (the entire contents of which is incorporated herein by reference).

### Zeolite B

Large crystallite CHA was prepared according to a method of making SSZ-13 by S.I. Zones and R A. Van Nordstrand, Zeolites 8 (1988) 166 (the entire contents of which is incorporated herein by reference) also published on International Zeolite Association Synthesis Commission web-site http://www.iza-online.org/synthesis/, as follows:

**The source materials were:**
sodium hydroxide (1 N), (Baker, reagent grade);
N,N,N, trimethyl-1-adamantanammonium hydroxide (RN-OH)(O.72M);
deionized water;
aluminium hydroxide (Reheis F-2000 dried gel, 50% Al₂O₃); and
fumed silica (Cab-Q-Sil, M5 grade, 97% SiO₂).

**The reaction mixture was prepared as follows:**
(1) 2.00 g IN NaOH + 2.78 g 0.72 M RN·OH + 3.22g water, add sequentially to a Teflon cup of a Parr 23 mL autoclave;
(2) (1) + 0.05 g aluminium hydroxide, mix until solution clears;
(3) (2) + 0.60 g fumed silica, mix until uniform.

**The reaction mixture was crystallised:**
in a Teflon-lined 23 mL autoclave (Parr model 4745) at a temperature of 160°C for 4 days without agitation;
After cooling to room temperature the mixture was filtered, washed with de-mineralised water and air-dried overnight.

**The resulting product was characterised by powder x-ray diffraction and identified as:**
CHA zeolite with a SiO₂/Al₂O₃ ratio of 28 as determined by ICP.

**SEM analysis showed:**
cubes of 2-5 micrometres.

### Zeolite C

A reaction mixture was prepared of molar composition 60 SiO₂ - 1.5 Al₂O₃ - 6 Na₂O - 12 NNNAnOH - 2640 H₂O, where NNNAnOH is the structure directing agent (SDA) or template N,N,N-trimethyladamantanammonium hydroxide

The reaction was prepared using cab-o-sil M5 (Cabot Corporation) as the source of silica, sodium aluminate (BDH Ltd), sodium hydroxide (Alfa Aesar). The SDA (NNNAnOH) was prepared following the method described in US patent no. 4,544,538 (the entire contents of which is incorporated herein by reference). The required amount of the SDA solution was weighed out and the NaOH added and stirred until it dissolved. The sodium aluminate solid was then added with stirring and stirring was continued until it dissolved. The cab-o-sil was then mixed in and the resulting mixture transferred to a 1L stainless steel autoclave. The autoclave was sealed and the mixture heated to 165C with stirring (300rpm) for 4 days.

The resulting product was identified as a CHA type material by powder x-ray diffraction. Visually, the product crystals were approximately 2 microns on edge. The product composition had a silica-alumina ratio (SAR) of 24:1.

### Example 2 - Preparation of 3wt%Cu/aluminosilicate zeolite

Copper was deposited on zeolites A, B and C prepared according to Example 1 by the standard wet impregnation method using copper acetate as the copper precursor. For 10g of aluminosilicate zeolite, 0.471g of copper acetate was dissolved in a sufficient amount of water to wet the aluminosilicate zeolite material. The solution was added to the aluminosilicate zeolite material and stirred. The wet powder was dried at 105°C, before being calcined at 500°C for 2 hours. Following calcination, a majority of the copper is understood to be present as copper (II) oxide.

The copper-loaded catalysts prepared according to this Example were designated as Catalysts A, B and C. Catalysts prepared according to Example 2 are referred to as "Fresh Catalysts A-C".

### Example 3 - Hydrothermal Ageing

Fresh Catalysts A-C prepared according to Example 2 were hydrothermally aged in an atmosphere containing 10% oxygen, 10% water, balance nitrogen at 750°C for a period of 24 hours. The hydrothermally aged catalyst is referred to as "Aged Catalysts A-C".

**Table 1: surface area, silica alumina ratio, crystal size and copper loading of the different catalysts (fresh).**

| **Chabazite Aluminosilicate code** | **BET surface area** | **Silica to alumina ratio (SAR)** | **Average SEM Crystal Dimension (micrometre)*** | **Cu loading wt%** |
|---|---|---|---|---|
| A | 784 | 26 | 0.15 | 3 |
| B | 634 | 24 | 0.5 | 3 |
| C | 616 | 24 | 1.4 | 3 |

| | | | | |
|---|---|---|---|---|
| * The samples were dispersed in methanol and subjected to ultrasound for 20 mins and a drop of this liquid was put on a standard carbon padded Scanning Electron Microscope (SEM) stub. Counting and sizing was determined by number averaged digital particle size analysis, based on "thresholding" the intensities from each pixel of an image, and exploiting the differences in intensity between particles and the background. The software assumes that each object detected is circular/spherical. | | | | |

### Example 4 - Activity Tests

The NOₓ conversion of Catalysts A-C of Examples 2 and 3 at an inlet gas temperature of 200°C or 400°C are given in Table 2. The NOₓ reduction performance was measured on a powder sample in a laboratory reactor by ramping the catalyst at 5°C per minute in a gas mixture containing 500ppm NO and NH₃, 10%O₂, 10%H₂O and N₂.

**Table 2: NOx conversion at a catalyst inlet gas temperature of 200°C and 400°C for Fresh and 750°C 24 hour-Aged Conditions**

| **Catalyst** | **SAR** | **Average SEM Crystal Dimension (micrometre) †** | **Cu Loading wt%** | **500°C Calcined % NOx Conversion** | | | **750°C Aged % NOx Conversion** | | |
|---|---|---|---|---|---|---|---|---|---|
| | | | | **190°C** | **200°C** | **400°C** | **190°C** | **200°C** | **400°C** |
| A | 26 | 0.15 | 3 | 73 | 86 | 99 | 44 | 58 | 96 |
| B | 24 | 0.5 | 3 | 85 | 95 | 99 | 51 | 66 | 97 |
| C | 24 | 1.4 | 3 | 87 | 97 | 99 | 68 | 83 | 99 |

| | | | | | | | | | |
|---|---|---|---|---|---|---|---|---|---|
| † See notes on Table 1. | | | | | | | | | |

It can be seen from Table 2 that the activity of the catalysts generally follows a trend of increasing activity with crystallite size. Hence we conclude that larger crystallite size aluminosilicate zeolite materials are surprisingly more active either fresh or hydrothermally aged than catalysts prepared from smaller crystals of the same aluminosilicate zeolite material.

## Claims

1. A synthetic aluminosilicate zeolite catalyst containing at least one catalytically active transition metal selected from the group consisting of Cu, Fe, Hf, La, Au, In, V, lanthanides and Group VIII transition metals, which aluminosilicate zeolite is a small pore aluminosilicate zeolite having a maximum ring size of eight tetrahedral atoms, wherein the mean crystallite size of the aluminosilicate zeolite determined by scanning electron microscope is >0.50 micrometre.

2. An aluminosilicate zeolite catalyst according to claim 1, wherein the at least one catalytically active transition metal is copper, iron or copper and iron.

3. An aluminosilicate zeolite catalyst according to claim 1 or 2, wherein the at least one catalytically active transition metal consists of copper.

4. An aluminosilicate zeolite catalyst according to any preceding claim, wherein the mean crystallite size is <15.00 micrometres.

5. An aluminosilicate zeolite catalyst according to any preceding claim, wherein the aluminosilicate zeolite is selected from the group consisting of Framework Type Codes ERI and LEV.

6. An aluminosilicate zeolite catalyst according to claim 5, wherein a type material or isotype framework structures of ERI are erionite, ZSM-34 or Linde Type T.

7. An aluminosilicate zeolite catalyst according to claim 5, wherein a type material or isotype framework structures of LEV are levynite, Nu-3, LZ-132 or ZK-20.

8. An aluminosilicate zeolite catalyst according to any preceding claim, wherein the total at least one transition metal present in the catalyst is from 0.1 to 10.0 wt% based on the total weight of the zeolite catalyst.

9. A method of converting nitrogen oxides in a gas to nitrogen by contacting the nitrogen oxides with a nitrogenous reducing agent in the presence of an aluminosilicate zeolite catalyst according to any preceding claim.

10. A method according to claim 9, wherein the nitrogen oxides are reduced with the reducing agent at a temperature of from 150°C to 750°C.

11. A method according to claim 9 or 10, wherein addition of nitrogenous reductant is controlled so that NH₃ at the zeolite catalyst inlet is controlled to be 60% to 200% of theoretical ammonia calculated at 1:1 NH₃/NO and 4:3 NH₃/NO₂.

12. A method according to any of claims 9 to 11, wherein nitrogen monoxide in the gas is oxidised to nitrogen dioxide using an oxidation catalyst located upstream of the zeolite catalyst and the resulting gas is then mixed with nitrogenous reductant before the mixture is fed into the zeolite catalyst, wherein the oxidation catalyst is adapted to yield a gas stream entering the zeolite catalyst having a ratio of NO to NO₂ of from about 4:1 to about 1:3 by volume.

13. A method according to any of claims 9 to 12, wherein the nitrogenous reductant is ammonia *per se,* hydrazine or an ammonia precursor selected from the group consisting of urea ((NH₂)₂CO), ammonium carbonate, ammonium carbamate, ammonium hydrogen carbonate and ammonium formate.

14. A method according to any of claims 9 to 13, wherein the gas containing nitrogen oxides is derived from the combustion of fuel in a vehicular lean burn internal combustion engine.

15. An exhaust system for a vehicular lean-burn internal combustion engine, which system comprising a conduit for carrying a flowing exhaust gas, a source of nitrogenous reductant, a synthetic aluminosilicate zeolite catalyst containing at least one catalytically active transition metal selected from the group consisting of Cu, Fe, Hf, La, Au, In, V, lanthanides and Group VIII transition metals, which aluminosilicate zeolite is a small pore aluminosilicate zeolite having a maximum ring size of eight tetrahedral atoms, disposed in a flow path of the exhaust gas and means for metering nitrogenous reductant into a flowing exhaust gas upstream of the zeolite catalyst, wherein the mean crystallite size of the aluminosilicate zeolite determined by scanning electron microscope is >0.50 micrometre.
